# EUROPEAN PATENT SPECIFICATION

(11) **EP 2 356 694 B1**
(45) Date of publication and mention of the grant of the patent: **25.02.2015**
(21) Application number: 09847137.8
(22) Date of filing: 15.12.2009
(51) Int. Cl.: H01L 31/042

(54) **SOLAR CELL PANEL**
SOLARZELLENTAFEL
PANNEAU DE CELLULES SOLAIRES

(30) Priority: 07.07.2009 KR 20090061705
(43) Date of publication of application: 17.08.2011
(73) Proprietor: LG Electronics Inc., Seoul 150-721 (KR)
(72) Inventor: LEE, Giwon, Seoul 137-724 (KR); HONG, Jongkyoung, Seoul 137-724 (KR); KIM, Jongdae, Seoul 137-724 (KR)
(74) Representative: Katérle, Axel
(86) International application number: PCT/KR2009/007491
(87) International publication number: WO 2011/004943

(56) References cited:
- DE-U1-202007 008 659
- JP-A- 2001 230 440
- JP-A- 2005 166 709
- JP-A- 2005 235 851
- JP-A- 2005 347 291
- JP-A- 2006 100 392
- JP-A- 2006 286 898
- JP-A- 2008 115 636
- JP-A- 2009 071 233

## Description

### Technical Field

Embodiments of the invention relate to a solar cell panel.

### Background art

Recently, as existing energy sources such as petroleum and coal are expected to be depleted, interests in alternative energy sources for replacing the existing energy sources are increasing. Among the alternative energy sources, solar cells generating electric energy from solar energy have been particularly spotlighted.

A conventional solar cell includes a substrate and an emitter layer, each of which is formed of a semiconductor, and electrodes respectively formed on the substrate and the emitter layer. The semiconductors forming the substrate and the emitter layer have different conductive types, such as a p-type and an n-type. A p-n junction is formed at an interface between the substrate and the emitter layer.

If light is incident on the solar cell, electrons inside the semiconductor become free electrons (hereinafter referred to as "electrons") by the photoelectric effect. Further, electrons and holes respectively move to an n-type semiconductor (e.g., the emitter layer) and a p-type semiconductor (e.g., the substrate) according to a principle of the p-n junction. Then, the electrons and the holes are respectively collected by the electrodes electrically connected to the emitter layer and the substrate.

At least one current collector, such as a bus bar, is formed on each of the emitter layer and the substrate. The at least one current collector on the emitter layer is electrically connected to the electrode of the emitter layer, and the at least one current collector on the substrate is electrically connected to the electrode of the substrate.

Because a very small amount of voltage and current are generated from one solar cell having the above-described structure, a solar cell module fabricated by connecting in series or parallel several solar cells to one another is used to obtain a desired output. The solar cell module is a moisture-proof module fabricated in a panel form.

A solar cell panel includes the above-described solar cell module and a frame receiving the solar cell module.

JP 2006/100392 discloses a solar array panel having a support member comprising an inner member with flexibility and an outer member that is more rigid than the inner member. The support member is generally u-shaped, and a solar array panel is inserted into a recess thereof. A top portion of the support member may extend farther toward a center of the solar array panel than a lower portion. A frame has an upper portion having an inclined edge and a lower portion that extends farther toward a center of the solar array panel than an upper portion. The upper and lower portions of the support member extend farther toward the center of the solar array panel than the upper and lower portions of the frame.

### Disclosure of Invention

### Technical Problem

The solar cell panel has to have durability under severe conditions of ultraviolet rays, snowstorm, acid rain, freezing, etc. In particular, as a life span of the solar cell module is reduced because of moisture penetrating inside the solar cell module, reducing or avoiding such moisture penetration in maintaining the durability of the solar cell panel is very important.

### Solution to Problem

Solar cell panels according to the appended independent claims are provided

In one aspect, there is a solar cell panel comprising a solar cell module, a support member attached to an edge of the solar cell module to support the solar cell module by elasticity of the support member, the support member including an upper part, a lower part, and a connection part connecting the upper part to the lower part, an end of the lower part protruding further than an end of the upper part toward a middle portion of the solar cell module, and a frame including a coupler including an upper coupling unit, a lower coupling unit, and a connection coupling unit connecting the upper coupling unit to the lower coupling unit, the frame supporting the solar cell module by coupling the support member attached to the solar cell module to the coupler.

The end of the upper part of the support member and an end of the upper coupling unit of the coupler may extend to the same line.

The end of the upper coupling unit of the coupler may protrude further than the end of the upper part of the support member toward the middle portion of the solar cell module. In this case, a first sealant may be positioned at the end of the upper part. An end of the first sealant and the end of the upper coupling unit of the coupler may extend to the same line. The end of the upper coupling unit of the frame may protrude further than the end of the first sealant toward the middle portion of the solar cell module.

The end of the lower part of the support member and the end of the lower coupling unit of the coupler may extend to the same line. The end of the lower part of the support member may protrude further than the end of the lower coupling unit of the coupler toward the middle portion of the solar cell module.

The end of the lower coupling unit of the coupler may protrude further than the end of the lower part of the support member toward the middle portion of the solar cell module. In this case, a second sealant is positioned at the end of the lower part of the support member. An end of the second sealant and the end of the lower coupling unit of the coupler may extend to the same line. The end of the second sealant may protrude further than the end of the lower coupling unit of the coupler toward the middle portion of the solar cell module.

The end of the upper coupling unit and the end of the lower coupling unit of the coupler may extend to the same line. The end of the lower coupling unit of the coupler may protrude further than the end of the upper coupling unit of the coupler toward the middle portion of the solar cell module.

The upper coupling unit of the coupler may have an inclined surface. The first and second sealants may be formed of silicon or elastic forming agent with excellent moisture resistance.

In another aspect, there is a solar cell panel comprising a solar cell module, a support member attached to an edge of the solar cell module to support the solar cell module by elasticity of the support member, the support member including an upper part, a lower part, and a connection part connecting the upper part to the lower part, a frame including a coupler including an upper coupling unit, a lower coupling unit, and a connection coupling unit connecting the upper coupling unit to the lower coupling unit, the frame supporting the solar cell module by coupling the support member attached to the solar cell module to the coupler, a first sealant positioned at an end of the upper part of the support member, and a second sealant positioned at an end of the lower part of the support member, wherein an end of the second sealant protrudes further than an end of the first sealant toward a middle portion of the solar cell module.

The end of the first sealant and an end of the upper coupling unit of the coupler may extend to the same line, or the end of the upper coupling unit of the coupler may protrude further than the end of the first sealant toward the middle portion of the solar cell module.

The end of the second sealant and an end of the lower coupling unit of the coupler may extend to the same line. The end of the second sealant may protrude further than the end of the lower coupling unit of the coupler toward the middle portion of the solar cell module. The end of the lower coupling unit of the coupler may protrude further than the end of the second sealant toward the middle portion of the solar cell module.

The end of the upper coupling unit and the end of the lower coupling unit of the coupler may extend to the same line. The end of the lower coupling unit of the coupler may protrude further than the end of the upper coupling unit of the coupler toward the middle portion of the solar cell module.

The upper coupling unit of the coupler may have an inclined surface. The first and second sealants may be formed of silicon or elastic forming agent with excellent moisture resistance.

### Brief Description of Drawings

FIG. 1 is a cross-sectional view illustrating a coupling state of a solar cell panel according to an embodiment of the invention;
FIG. 2 is a cross-sectional view illustrating an exploded state of a solar cell panel according to an embodiment of the invention;
FIG. 3 is an exploded perspective view of a solar cell module;
FIG. 4 is a cross-sectional view illustrating a modified example of a solar cell panel according to an embodiment of the invention; and
FIG. 5 is a cross-sectional view illustrating another modified example of a solar cell panel according to an embodiment of the invention.

### Mode for the Invention

The invention will be described more fully hereinafter with reference to the accompanying drawings, in which example embodiments of the inventions are shown. This invention may, however, be embodied in many different forms and should not be construed as limited to the embodiments set forth herein.

In the drawings, the thickness of layers, films, panels, regions, etc., are exaggerated for clarity. Like reference numerals designate like elements throughout the specification. It will be understood that when an element such as a layer, film, region, or substrate is referred to as being "on" another element, it can be directly on the other element or intervening elements may also be present. In contrast, when an element is referred to as being "directly on" another element, there are no intervening elements present.

Reference will now be made in detail to embodiments of the invention, examples of which are illustrated in the accompanying drawings.

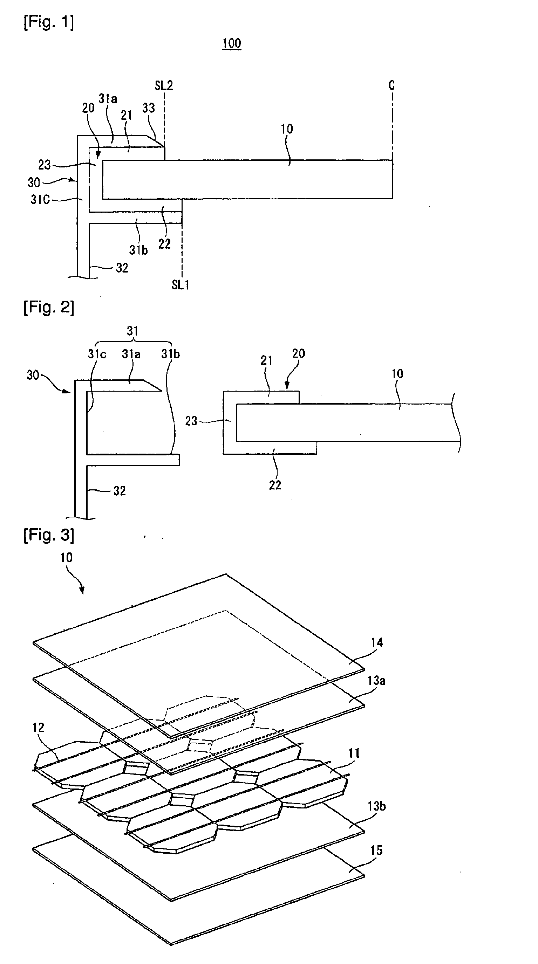

FIG. 1 is a cross-sectional view illustrating a coupling state of a solar cell panel according to an embodiment of the invention. FIG. 2 is a cross-sectional view illustrating an exploded state of the solar cell panel shown in FIG. 1. As shown in FIGS. 1 and 2, a solar cell panel 100 includes a solar cell module 10, a support member 20 attached to an edge of the solar cell module 10, and a frame 30 supporting the solar cell module 10 through the support member 20.

The support member 20 has an about U-shaped appearance. The support member 20 includes an upper part 21, a lower part 22, and a connection part 23 connecting the upper part 21 to the lower part 22. The support member 20 may be formed of a tape with elasticity. Other materials may be used.

The frame 30 includes a female type coupling unit (or coupler) 31 providing an almost rectangular space and a leg unit 32 having an L-shaped section. The female type coupling unit 31 includes an upper coupling unit 31a coupled to the upper part 21, a lower coupling unit 31b coupled to the lower part 22, and a connection coupling unit 31c coupled to the connection part 23.

FIG. 3 is an exploded perspective view of the solar cell module 10. As shown in FIG. 3, the solar cell module 10 includes a plurality of solar cells 11, a plurality of interconnectors 12 electrically connecting the plurality of solar cells 11 to one another, passivation layers 13a and 13b protecting the solar cells 11, a transparent member 14 on the upper passivation layer 13a that is positioned near to light receiving surfaces of the solar cells 11, and a back sheet 15 underlying the lower passivation layer 13b that is positioned near to surfaces of the solar cells 11 opposite the light receiving surfaces of the solar cells 11. The components 11, 12, 13a, 13b, 14, and 15 form an integral body through a lamination process.

The back sheet 15 reduces or prevents moisture from penetrating in the rear of the solar cell module 10 to protect the solar cells 11 from an external environment. The back sheet 15 may have a multi-layered structure including a layer for reducing or preventing moisture and oxygen penetration, a layer for reducing or preventing chemical corrosion, and a layer having insulating characteristics, for example.

The passivation layers 13a and 13b and the solar cells 11 form an integral body through the lamination process in a state where the upper and lower passivation layers 13a and 13b are respectively positioned on upper parts and lower parts of the solar cells 11. The passivation layers 13a and 13b reduce or prevent corrosion resulting from the moisture penetration and protect the solar cells 11 from an impact. The passivation layers 13a and 13b may be formed of ethylene vinyl acetate (EVA). Other materials may be used.

The transparent member 14 on the upper passivation layer 13a may be formed of tempered glass having a high transmittance and an excellent damage prevention performance. Other materials may be used. The tempered glass may be low iron tempered glass containing a small amount of iron. The transparent member 14 may have an embossed inner surface so as to increase light scattering.

The solar cell module 10 is manufactured by a method sequentially including testing the plurality of solar cells 11, electrically connecting the tested solar cells 11 to one another using the interconnectors 12, successively disposing the back sheet 15, the lower passivation layer 13b, the solar cells 11, the upper passivation layer 13a, and the transparent member 14 from the bottom of the solar cell module 10 in the order named, performing the lamination process in a vacuum state to form an integral body of the components 11, 12, 13a, 13b, 14, and 15, performing an edge rimming process, testing the completed solar cell module 10, and the like.

The solar cell module 10 having the above-described configuration is coupled to the frame 30 using the support member 20 as described above.

An end of the lower part 22 of the support member 20 protrudes further than an end of the upper part 21 of the support member 20 toward a middle (or a middle portion) "C" of the solar cell module 10, so as to reduce or prevent moisture from penetrating through a rear attaching portion of the solar cell panel 100, i.e., an attaching portion of the lower part 22 and the lower coupling unit 31b of the female type coupling unit 31. Further, an end of the lower coupling unit 31b protrudes further than an end of the upper coupling unit 31a toward the middle "C" of the solar cell module 10, and the end of the lower part 22 and the end of the lower coupling unit 31b extend to the same line SL1.

In a front attaching part of the solar cell panel 100, i.e., an attaching portion of the upper part 21 of the support member 20 and the upper coupling unit 31a of the female type coupling unit 31, an end of the upper part 21 and an end of the upper coupling unit 31a extend to the same line SL2. Further, the upper coupling unit 31a has an inclined surface 33, and thus, a shadow effect is suppressed. The shadow effect refers to an effect that occurs when light is incident on the solar cell module 10 at a predetermined angle with respect to the solar cell module 10, and the light is not incident (or a shadow is cast) on a predetermined portion of the solar cell module 10 corresponding to a location adjacent to the end of the upper coupling unit 31a and/or the end of the upper part 21.

In FIG. 1, the end of the lower part 22 and the end of the lower coupling unit 31b extend to the same line SL1, the end of the upper part 21 and the end of the upper coupling unit 31a extend to the same line SL2, and the end of the lower coupling unit 31b protrudes further than the end of the upper coupling unit 31a toward the middle "C" of the solar cell module 10. However, unlike the structure shown in FIG. 1, the end of the lower part 22 may protrude further than the end of the lower coupling unit 31b toward the middle "C" of the solar cell module 10. Further, the end of the upper coupling unit 31a and the end of the lower coupling unit 31b may extend to the same line SL2, and also the end of the lower part 22 may protrude further than the end of the lower coupling unit 31b toward the middle "C" of the solar cell module 10.

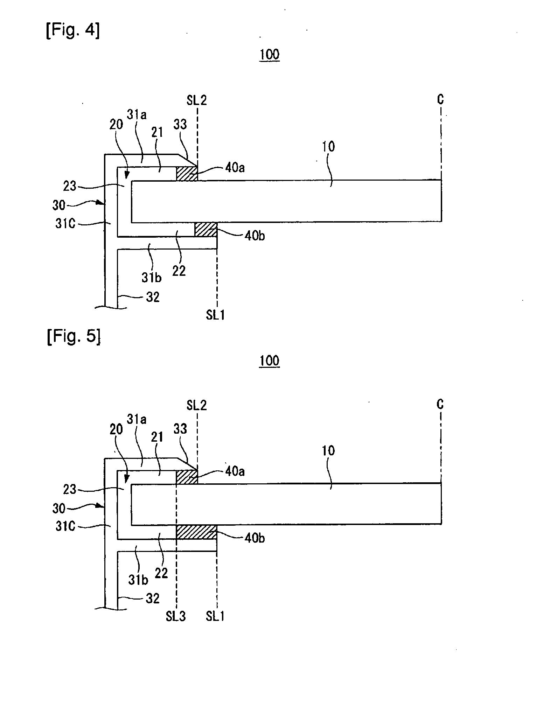

FIG. 4 is a cross-sectional view illustrating a modified example of the solar cell panel 100 shown in FIG. 1. As shown in FIG. 4, the end of the lower coupling unit 31b protrudes further than the end of the lower part 22 toward the middle "C" of the solar cell module 10, and a second sealant 40b is positioned at the end of the lower part 22. An end of the second sealant 40b and the end of the lower coupling unit 31b extend to the same line SL1. Although it is not shown, the end of the second sealant 40b may protrude further than the end of the lower coupling unit 31b toward the middle "C" of the solar cell module 10.

The end of the upper coupling unit 31a protrudes further than the end of the upper part 21 toward the middle "C" of the solar cell module 10, and a first sealant 40a is positioned at the end of the upper part 21. An end of the first sealant 40a and the end of the upper coupling unit 31a extend to the same line SL2. Although it is not shown, the end of the upper coupling unit 31a may protrude further than the end of the first sealant 40a toward the middle "C" of the solar cell module 10, in other embodiments.

The first sealant 40a positioned at the end of the upper part 21 and the second sealant 40b positioned at the end of the lower part 22 may be formed of silicon or elastic forming agent with excellent moisture resistance.

In the solar cell panel 100 according to the embodiment of the invention described so far, the end of the lower part 22 of the support member 20 protrudes further than the end of the upper part 21 of the support member 20 toward the middle "C" of the solar cell module 10. However, the end of the upper part 21 and the end of the lower part 22 of the support member 20 may extend to the same line. This is below described with reference to FIG. 5.

FIG. 5 is a cross-sectional view illustrating another modified example of the solar cell panel 100 shown in FIG. 1. As shown in FIG. 5, the end of the upper part 21 and the end of the lower part 22 of the support member 20 may extend to the same line SL3, and the end of the lower coupling unit 31b of the female type coupling unit 31 protrudes further than the end of the upper coupling unit 31a of the female type coupling unit 31 toward the middle "C" of the solar cell module 10.

A first sealant 40a is positioned at the end of the upper part 21, and a second sealant 40b is positioned at the end of the lower part 22. An end of the first sealant 40a and the end of the upper coupling unit 31a extend to the same line SL2, and an end of the second sealant 40b and the end of the lower coupling unit 31b extend to the same line SL1. Although it is not shown, the end of the upper coupling unit 31a may protrude further than the end of the first sealant 40a toward the middle "C" of the solar cell module 10. Further, the end of the lower coupling unit 31b may protrude further than the end of the second sealant 40b toward the middle "C" of the solar cell module 10, and the end of the second sealant 40b may protrude further than the end of the lower coupling unit 31b toward the middle "C" of the solar cell module 10.

The end of the second sealant 40b protrudes further than the end of the first sealant 40a toward the middle "C" of the solar cell module 10. For this, a width of the second sealant 40b may be greater than a width of the first sealant 40a.

Accordingly, in embodiments of the invention, an amount of the upper part of the support member that extends towards the middle of the solar cell module may be different from an amount of the lower part of the support member that extends towards the middle of the solar cell module, but in other embodiments, such may be the same. Also, in embodiments of the invention, an amount of the upper coupling unit of the frame that extends towards the middle of the solar cell module may be different from an amount of the lower coupling unit that extends towards the middle of the solar cell module, but in other embodiments, such may be the same. Further, in embodiments of the invention, an amount of the first sealant that extends towards the middle of the solar cell module may be different from an amount of the second sealant that extends towards the middle of the solar cell module, but in other embodiments, such may be the same. Finally, in embodiments of the invention, reference to elements extending to lines SL1, SL2 and/or SL3 also refers to the elements extending to particular (or selected) positions or locations on the solar cell module.

## Claims

1. A solar cell panel comprising:
a solar cell module (10);
a support member (20) attached to an edge of the solar cell module (10) to support the solar cell module (10) by elasticity of the support member (20), the support member (20) including an upper part (21), a lower part (22), and a connection part (23) connecting the upper part (21) to the lower part (22); and
a frame (30) including a coupler (31) including an upper coupling unit (31a), a lower coupling unit (31b), and a connection coupling unit (31c) connecting the upper coupling unit (31a) to the lower coupling unit (31b), the frame (30) supporting the solar cell module (10) by coupling the support member (20) attached to the solar cell module (10) to the coupler (31),
wherein an end of the lower part (22) protrudes further than an end of the upper part (21) toward a middle portion (C) of the solar cell module (10);
**characterized by** further comprising a first sealant (40a) positioned at the end of the upper part (21) of the support member (20).
wherein an end of the upper coupling unit (31a) of the frame (30) protrudes further than the end of the upper part (21) of the support member (20) toward the middle portion (C) of the solar cell module (10).

2. The solar cell panel of claim 1, wherein an end of the first sealant (40a) and the end of the upper coupling unit (31a) of the frame (30) extend to the same line (SL2) or the end of the upper coupling unit (31a) of the frame (30) protrudes further than the end of the first sealant (40a) toward the middle portion (C) of the solar cell module (10). (C)

3. The solar cell panel of claim 1, wherein the end of the lower part (22) of the support member (20) and an end of the lower coupling unit (31b) of the frame (30) extend to the same line (SL1).

4. The solar cell panel of claim 1, wherein the end of the lower part (22) of the support member (20) protrudes further than an end of the lower coupling unit (31b) of the frame (30) toward the middle portion (C) of the solar cell module (10).

5. The solar cell panel of claim 1, wherein an end of the lower coupling unit (31b) of the frame (30) protrudes further than the end of the lower part (22) of the support member (20) toward the middle portion (C) of the solar cell module (10), and a second sealant (40b) is positioned at the end of the lower part (22).

6. The solar cell panel of claim 5, wherein an end of the second sealant (40b) and the end of the lower coupling unit (31b) of the frame (30) extend to the same line or the end of the second sealant (40b) protrudes further than the end of the lower coupling unit (31b) of the frame (30) toward the middle portion (C) of the solar cell module (109.

7. The solar cell panel of claim 1, wherein an end of the upper coupling unit (31a) and an end of the lower coupling unit (31b) of the frame (30) extend to the same line or the end of the lower coupling unit (31b) of the frame (30) protrudes further than the end of the upper coupling unit (31a) of the frame (30) toward the middle portion (C) of the solar cell module (10).

8. The solar cell panel of claim 1, wherein the upper coupling unit (31a) of the frame (30) has an inclined surface.

9. A solar cell panel comprising:
a solar cell module (10);
a support member (20) attached to an edge of the solar cell module (10) to support the solar cell module (10) by elasticity of the support member (20), the support member (20) including an upper part (21), a lower part (22), and a connection part (23) connecting the upper part (21) to the lower part (22); and
a frame (30) including a coupler (31) including an upper coupling unit (31a), a lower coupling unit (31b), and a connection coupling unit (31c) connecting the upper coupling unit (31a) to the lower coupling unit (31b), the frame (30) supporting the solar cell module (10) by coupling the support member (20) attached to the solar cell module (10) to the coupler (31);
**characterized by** further comprising:
a first sealant (40a) positioned at an end of the upper part (21) of the support member (20); and
a second sealant (40b) positioned at an end of the lower part (22) of the support member (20),
wherein an end of the second sealant (40b) protrudes further than an end of the first sealant (40a) toward a middle portion (C) of the solar cell module (10).

10. The solar cell panel of claim 9, wherein the end of the first sealant (40a) and an end of the upper coupling unit (31a) of the frame (30) extend to the same line, or the end of the upper coupling unit (31a) of the frame (30) protrudes further than the end of the first sealant (40a) toward the middle portion (C) of the solar cell module (10).

11. The solar cell panel of claim 9, wherein the end of the second sealant (40b) and an end of the lower coupling unit (31b) of the frame (30) extend to the same line.

12. The solar cell panel of claim 9, wherein the end of the second sealant (40b) protrudes further than an end of the lower coupling unit (31b) of the frame (30) toward the middle portion (C) of the solar cell module (10), or the end of the lower coupling unit (31b) of the frame (30) protrudes further than the end of the second sealant (40b) toward the middle portion (C) of the solar cell module (10).

13. The solar cell panel of claim 9, wherein an end of the upper coupling unit (31a) and an end of the lower coupling unit (31b) of the frame (30) extend to the same line or the end of the lower coupling unit (31b) of the frame (30) protrudes further than the end of the upper coupling unit (31a) of the frame (30) toward the middle portion (C) of the solar cell module (10).

## Patentansprüche

1. Solarzellenpanel mit:
- einem Solarzellenmodul (10),
- einem Halteelement (20), das an einem Rand des Solarzellenmoduls (10) angebracht ist, um durch die Elastizität des Halteelements (20) das Solarzellenmodul (10) zu halten, wobei das Halteelement (20) ein oberes Teil (21), ein unteres Teil (22) und ein Verbindungssteil (23) umfasst, das das obere Teil (21) mit dem unteren Teil (22) verbindet, und
- einem Rahmen (30), der eine Koppeleinrichtung (31) mit einem oberen Koppelelement (31a), einem unteren Koppelelement (31b) und einem Verbindungskoppelelement (31c) umfasst, das das obere Koppelelement (31a) mit dem unteren Koppelelement (31b) verbindet, wobei der Rahmen (30) das Solarzellenmodul (10) durch Koppeln des am Solarzellenmodul (10) angebrachten Halteelements (20) mit der Koppeleinrichtung (31) trägt,
- wobei ein Ende des unteren Teils (22) weiter als ein Ende des oberen Teils (21) zu einem mittleren Abschnitt (C) des Solarzellenmoduls (10) vorspringt,
- **dadurch gekennzeichnet, dass** es ferner ein erstes Dichtmittel (40a) umfasst, das am Ende des oberen Teils (21) des Halteelements (20) positioniert ist,
- wobei ein Ende des oberen Koppelelements (31a) des Rahmens (30) weiter als das Ende des oberen Teils (21) des Halteelements (20) zum mittleren Abschnitt (C) des Solarzellenmoduls (10) vorspringt.

2. Solarzellenpanel nach Anspruch 1, wobei sich ein Ende des ersten Dichtmittels (40a) und das Ende des oberen Koppelelements (31a) des Rahmens (30) zu derselben Linie (SL2) erstrecken oder das Ende des oberen Koppelelements (31a) des Rahmens (30) weiter als das Ende des ersten Dichtmittels (40a) zum mittleren Abschnitt (C) des Solarzellenmoduls (10) vorspringt.

3. Solarzellenpanel nach Anspruch 1, wobei sich das Ende des unteren Teils (22) des Halteelements (20) und ein Ende des unteren Koppelelements (31b) des Rahmens (30) zu derselben Linie (SL1) erstrecken.

4. Solarzellenpanel nach Anspruch 1, wobei das Ende des unteren Teils (22) des Halteelements (20) weiter als ein Ende des unteren Koppelelements (31b) des Rahmens (30) zum mittleren Abschnitt (C) des Solarzellenmoduls (10) vorspringt.

5. Solarzellenpanel nach Anspruch 1, wobei ein Ende des unteren Koppelelements (31b) des Rahmens (30) weiter als das Ende des unteren Teils (22) des Halteelements (20) zum mittleren Abschnitt (C) des Solarzellenmoduls (10) vorspringt und ein zweites Dichtmittel (40b) am Ende des unteren Teils (22) positioniert ist.

6. Solarzellenpanel nach Anspruch 5, wobei sich ein Ende des zweiten Dichtmittels (40b) und das Ende des unteren Koppelelements (31b) des Rahmens (30) zu derselben Linie erstrecken oder das Ende des zweiten Dichtmittels (40b) weiter als das Ende des unteren Koppelelements (31b) des Rahmens (30) zum mittleren Abschnitt (C) des Solarzellenmoduls (10) vorspringt.

7. Solarzellenpanel nach Anspruch 1, wobei sich ein Ende des oberen Koppelelements (31a) und ein Ende des unteren Koppelelements (31b) des Rahmens (30) zu derselben Line erstrecken oder das Ende des unteren Koppelelements (31b) des Rahmens (30) weiter als das Ende des oberen Koppelelements (31a) des Rahmens (30) zum mittleren Abschnitt (C) des Solarzellemoduls (10) vorspringt.

8. Solarzellenpanel nach Anspruch 1, wobei das obere Koppelelement (31a) des Rahmens (30) eine abgeschrägte Oberfläche hat.

9. Solarzellenpanel mit:
- einem Solarzellenmodul (10),
- einem Halteelement (20), das an einem Rand des Solarzellenmoduls (10) angebracht ist, um durch die Elastizität des Halteelements (20) das Solarzellenmodul (10) zu halten, wobei das Halteelement (20) ein oberes Teil (21), ein unteres Teil (22) und ein Verbindungssteil (23) umfasst, das das obere Teil (21) mit dem unteren Teil (22) verbindet, und
- einem Rahmen (30), der eine Koppeleinrichtung (31) mit einem oberen Koppelelement (31a), einem unteren Koppelelement (31b) und einem Verbindungskoppelelement (31c) umfasst, das das obere Koppelelement (31a) mit dem unteren Koppelelement (31b) verbindet, wobei der Rahmen (30) das Solarzellenmodul (10) durch Koppeln des am Solarzellenmodul (10) angebrachten Halteelements (20) mit der Koppeleinrichtung (31) trägt,
- **dadurch gekennzeichnet, dass** es ferner umfasst:
- ein erstes Dichtmittel (40a), das an einem Ende des oberen Teils (21) des Halteelements (20) positioniert ist, und
- ein zweites Dichtmittel (40b), das an einem Ende des unteren Teils (22) des Halteelements (20) positioniert ist,
- wobei ein Ende des zweiten Dichtmittels (40b) weiter als ein Ende des ersten Dichtmittels (40a) zu einem mittleren Abschnitt (C) des Solarzellenmoduls (10) vorspringt.

10. Solarzellenpanel nach Anspruch 9, wobei sich das Ende des ersten Dichtmittels (40a) und ein Ende des oberen Koppelelements (31a) des Rahmens (30) zu derselben Linie erstrecken oder das Ende des oberen Koppelelements (31a) des Rahmens (30) weiter als das Ende des ersten Dichtmittels (40a) zum mittleren Abschnitt (C) des Solarzellenmoduls (10) vorspringt.

11. Solarzellenpanel nach Anspruch 9, wobei sich das Ende des zweiten Dichtmittels (40b) und ein Ende des unteren Koppelelements (31b) des Rahmens (30) zu derselben Linie erstrecken.

12. Solarzellenpanel nach Anspruch 9, wobei das Ende des zweiten Dichtmittels (40b) weiter als ein Ende des unteren Koppelelements (31b) des Rahmens (30) zum mittleren Abschnitt (C) des Solarzellenmoduls (10) vorspringt oder das Ende des unteren Koppelelements (31b) des Rahmens (30) weiter als das Ende des zweiten Dichtmittels (40b) zum mittleren Abschnitt (C) des Solarzellenmoduls (10) vorspringt.

13. Solarzellenpanel nach Anspruch 9, wobei sich ein Ende des oberen Koppelelements (31a) und ein Ende des unteren Koppelelements (31b) des Rahmens (30) zu derselben Linie erstrecken oder das Ende des unteren Koppelelements (31b) des Rahmens (30) weiter als das Ende des oberen Koppelelements (31a) des Rahmens (30) zum mittleren Abschnitt (C) des Solarzellenmoduls (10) vorspringt.

## Revendications

1. Panneau de cellules solaires comprenant :
un module (10) de cellules solaires ;
un élément de support (20) fixé à un bord du module (10) de cellules solaires pour supporter le module (10) de cellules solaires par élasticité de l'élément de support (20), l'élément de support (20) comprenant une partie supérieure (21), une partie inférieure (22) et une partie de connexion (23) connectant la partie supérieure (21) à la partie inférieure (22) ; et
un châssis (30) comprenant un coupleur (31) incluant une unité de couplage supérieure (31a), une unité de couplage inférieure (31b) et une unité de couplage de connexion (31c) connectant l'unité de couplage supérieure (31a) à l'unité de couplage inférieure (31b), le châssis (30) supportant le module (10) de cellules solaires en couplant l'élément de support (20) fixé au module (10) de cellules solaires au coupleur (31),
dans lequel une extrémité de la partie inférieure (22) fait saillie davantage qu'une extrémité de la partie supérieure (21) vers une partie intermédiaire (C) du module (10) de cellules solaires ;
**caractérisé en ce qu'**il comprend en outre un premier élément d'étanchéité (40a) positionné au niveau de l'extrémité de la partie supérieure (21) de l'élément de support (20),
dans lequel une extrémité de l'unité de couplage supérieure (31a) du châssis (30) fait saillie davantage que l'extrémité de la partie supérieure (21) de l'élément de support (20) vers la partie intermédiaire (C) du module (10) de cellules solaires.

2. Panneau de cellules solaires selon la revendication 1, dans lequel une extrémité du premier élément d'étanchéité (40a) et l'extrémité de l'unité de couplage supérieure (31a) du châssis (30) s'étendent vers la même ligne (SL2) ou l'extrémité de l'unité de couplage supérieure (31a) du châssis (30) fait saillie davantage que l'extrémité du premier élément d'étanchéité (40a) vers la partie intermédiaire (C) du module (10) de cellules solaires.

3. Panneau de cellules solaires selon la revendication 1, dans lequel l'extrémité de la partie inférieure (22) de l'élément de support (20) et une extrémité de l'unité de couplage inférieure (31b) du châssis (30) s'étendent vers la même ligne (SL1).

4. Panneau de cellules solaires selon la revendication 1, dans lequel l'extrémité de la partie inférieure (22) de l'élément de support (20) fait davantage saillie qu'une extrémité de l'unité de couplage inférieure (31b) du châssis (30) vers la partie intermédiaire (C) du module (10) de cellules solaires.

5. Panneau de cellules solaires selon la revendication 1, dans lequel une extrémité de l'unité de couplage inférieure (31b) du châssis (30) fait davantage saillie que l'extrémité de la partie inférieure (22) de l'élément de support (20) vers la partie intermédiaire (C) du module (10) de cellules solaires, et un deuxième élément d'étanchéité (40b) est positionné au niveau de l'extrémité de la partie inférieure (22).

6. Panneau de cellules solaires selon la revendication 5, dans lequel une extrémité du deuxième élément d'étanchéité (40b) et l'extrémité de l'unité de couplage inférieure (31b) du châssis (30) s'étendent vers la même ligne ou l'extrémité du deuxième élément d'étanchéité (40b) fait saillie davantage que l'extrémité de l'unité de couplage inférieure (31b) du châssis (30) vers la partie intermédiaire (C) du module (10) de cellules solaires.

7. Panneau de cellules solaires selon la revendication 1, dans lequel une extrémité de l'unité de couplage supérieure (31a) et une extrémité de l'unité de couplage inférieure (31b) du châssis (30) s'étendent vers la même ligne ou l'extrémité de l'unité de couplage inférieure (31b) du châssis (30) fait davantage saillie que l'extrémité de l'unité de couplage supérieure (31a) du châssis (30) vers la partie intermédiaire (C) du module de cellules solaires (10).

8. Panneau de cellules solaires selon la revendication 1, dans lequel l'unité de couplage supérieure (31a) du châssis (30) comporte une surface inclinée.

9. Panneau de cellules solaires comprenant :
un module (10) de cellules solaires ;
un élément de support (20) fixé à un bord du module (10) de cellules solaires pour supporter le module (10) de cellules solaires par élasticité de l'élément de support (20), l'élément de support (20) comprenant une partie supérieure (21), une partie inférieure (22) et une partie de connexion (23) connectant la partie supérieure (21) à la partie inférieure (22) ; et
un châssis (30) comprenant un coupleur (31) incluant une unité de couplage supérieure (31a), une unité de couplage inférieure (31b) et une unité de couplage de connexion (31c) connectant l'unité de couplage supérieure (31a) à l'unité de couplage inférieure (31b), le châssis (30) supportant le module (10) de cellules solaires en couplant l'élément de support (20) fixé au module (10) de cellules solaires au coupleur (31) ;
**caractérisé en ce qu'**il comprend en outre :
un premier élément d'étanchéité (40a) positionné au niveau d'une extrémité de la partie supérieure (21) de l'élément de support (20) ; et
un deuxième élément d'étanchéité (40b) positionné au niveau d'une extrémité de la partie inférieure (22) de l'élément de support (20),
dans lequel une extrémité du deuxième élément d'étanchéité (40b) fait saillie davantage qu'une extrémité du premier élément d'étanchéité (40a) vers une partie intermédiaire (C) du module (10) de cellules solaires.

10. Panneau de cellules solaires selon la revendication 9, dans lequel l'extrémité du premier élément d'étanchéité (40a) et une extrémité de l'unité de couplage supérieure (31a) du châssis (30) s'étendent vers la même ligne, ou l'extrémité de l'unité de couplage supérieure (31a) du châssis (30) fait saillie davantage que l'extrémité du premier élément d'étanchéité (40a) vers la partie intermédiaire (C) du module (10) de cellules solaires.

11. Panneau de cellules solaires selon la revendication 9, dans lequel l'extrémité du deuxième élément d'étanchéité (40b) et une extrémité de l'unité de couplage inférieure (31b) du châssis (30) s'étendent vers la même ligne.

12. Panneau de cellules solaires selon la revendication 9, dans lequel l'extrémité du deuxième élément d'étanchéité (40b) fait saillie davantage qu'une extrémité de l'unité de couplage inférieure (31b) du châssis (30) vers la partie intermédiaire (C) du module (10) de cellules solaires, ou l'extrémité de l'unité de couplage inférieure (31b) du châssis (30) fait saillie davantage que l'extrémité du deuxième élément d'étanchéité (40b) vers la partie intermédiaire (C) du module (10) de cellules solaires.

13. Panneau de cellules solaires selon la revendication 9, dans lequel une extrémité de l'unité de couplage supérieure (31a) et une extrémité de l'unité de couplage inférieure (31b) du châssis (30) s'étendent vers la même ligne ou l'extrémité de l'unité de couplage inférieure (31b) du châssis (30) fait saillie davantage que l'extrémité de l'unité de couplage supérieure (31a) du châssis (30) vers la partie intermédiaire (C) du module (10) de cellules solaires.
